# EUROPEAN PATENT APPLICATION

(11) **EP 2 130 469 A1**
(43) Date of publication of application: **09.12.2009**
(21) Application number: 09162042.7
(22) Date of filing: 05.06.2009
(51) Int. Cl.: A47J 43/044

(54) **Hand held blender with switch arrangement**

(30) Priority: 06.06.2008 AU 2008902873
(71) Applicant: Wilson, Ian Geoffrey, Cheltenham, NSW 2119 (AU)
(72) Inventor: Wilson, Ian Geoffrey, Cheltenham, NSW 2119 (AU)
(74) Representative: Curley, Donnacha John

(57) **Abstract**

A hand blender switch arrangement on a hand-held food blender; said switch arrangement including a first activation switch and a second operating switch; said first activation switch located in an upper surface of an upper body portion of a power unit of said blender; said second operating switch located in a front surface of a hand grip portion of said blender remote from said first activation switch such that said first activation switch cannot be readily operated by a hand gripping said hand blender for use.

## Description

The present invention relates to food blenders and, more particularly, to switching arrangements for hand held food blenders.

### BACKGROUND

Hand-held food blenders, sometimes known as "stick mixers" have become popular accessories in kitchens. More recently, with the development of better battery systems, cordless mixers have found increasing acceptance.

Although inherently safer than mains powered mixers, it has been found desirable to incorporate similar safety switching arrangements in cordless hand-held blender also. Known safety switching arrangements include the activation of the blender by two switches which may require simultaneous or sequential operation. In addition there may be a time delay associated with enabling the blender for use.

Disadvantages of known systems include that some users do not understand, or forget the method of operating the switching arrangement. As well dual switch systems typically have the two switches adjacent on that part of the mixer gripped by the hand of a user so that the blender may be activated unintentionally. Furthermore, during use, inadvertent relaxation of pressure on the enabling switch can turn the blender off, so that if a time delay is incorporated, the correct enabling sequence has to be repeated.

It is an object of the present invention to address or at least ameliorate some of the above disadvantages.

### Notes

1. The term "comprising" (and grammatical variations thereof) is used in this specification in the inclusive sense of "having" or "including", and not in the exclusive sense of "consisting only of".
2. The above discussion of the prior art in the Background of the invention, is not an admission that any information discussed therein is citable prior art or part of the common general knowledge of persons skilled in the art in any country.

### BRIEF DESCRIPTION OF INVENTION

Accordingly, in a first broad form of the invention, ther is provided a hand blender switch arrangement on a hand-held food blender; said switch arrangement including a first activation switch and a second operating switch; said first activation switch located in an upper surface of an upper body portion of a power unit of said blender; said second operating switch located in a front surface of a hand grip portion of said blender remote from said first activation switch such that said first activation switch cannot be readily operated by a hand gripping said hand blender for use.

Preferably, operation of said first activation switch enables activation of said second operating switch.

Preferably, depressing of said second operating switch when enabled sets blades of said hand blender into rotary motion.

Preferably, said first activating switch is located in an upper portion of said hand blender; said upper portion projecting above a hand-grip section of said hand blender; said upper portion un-obscured by a hand of a user gripping said hand blender for use.

Preferably, said second operating switch is located in a portion of said hand-grip section of said hand blender; said switch located so as to be operable by a finger of a user curled around said hand-grip section for use.

Preferably, activation of said second operating switch is enabled by operation of said first activation switch for a predetermined period.

Preferably, said predetermined period is preset in a range of between 2 and 20 seconds at manufacture of said hand blender.

Preferably, said predetermined period is selectable by a user of said hand blender; said predetermined period selectable in a range of between 2 and 20 seconds.

Preferably, said hand blender remains intermittently operable by said second operating switch after operation of said first activation switch, provided any period of inactivity of said hand blender does not exceed said predetermined period.

Preferably, an indicator adjacent said first activation switch indicates that said hand blender is in an activated state; said indicator remaining in an indicating state for at least said predetermined period.

Preferably, said indicator remains in said indicating state for as long as said blender remains operable.

Preferably, said indicator is an LED located within said first activation switch.

Preferably, said indicator is an LCD screen located adjacent said first activation switch.

Preferably, said indicator includes an audible signal.

Preferably, a speed selection switch is located adjacent said first activation switch.

Preferably, a selected speed is indicated on said LCD screen.

In a further broad form of the invention, there is provided a method of operating a hand blender by means of a first activating switch and a second operating switch; said method including the steps of:
(a) depressing said first activating switch located in an upper portion of a handle of said hand blender,
(b) depressing said second operating switch located in a front surface of a hand grip section of said blender,
and wherein said first activating switch is remote from said second operating switch such that said first activating switch and said second operating switch cannot readily be operated with the fingers of a hand normally gripping said hand grip section.

### BRIEF DESCRIPTION OF DRAWINGS

Embodiments of the present invention will now be described with reference to the accompanying drawings wherein:
Figure 1 is a general perspective view of a hand-held food blender incorporating the switch arrangement of the present invention,
Figure 2 is a close up view of a handgrip portion of the blender of Figure 1 showing the switch arrangement in detail,
Figure 3 shows the hand of a user gripping the handgrip portion of Figure 2 when the blender of Figure 1 is in use.
Figure 4 is a block schematic diagram of an electronic implementation of a preferred embodiment of the present invention.

### DETAILED DESCRIPTION OF PREFERRED EMBODIMENTS

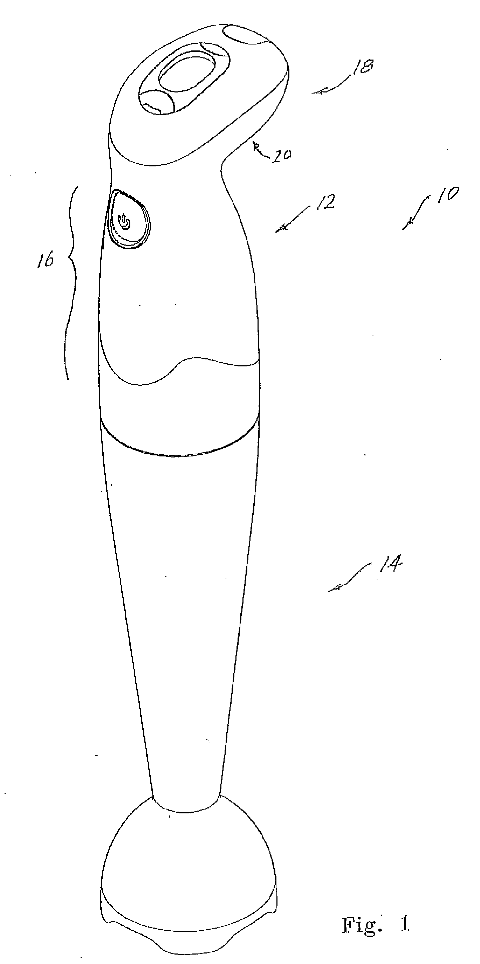

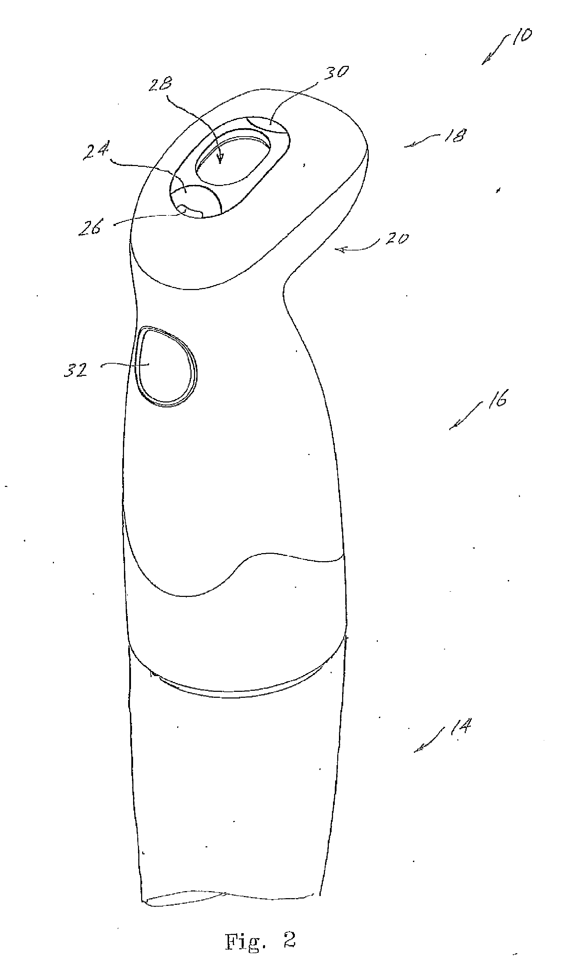

With reference to Figures 1 and 2, a hand-held food blender or "stick mixer" 10 includes a power unit 12 and a blade extension unit 14. Power unit 12 comprises a body formed of a suitable high impact injection moulded plastic, and may be provided with a soft handgrip portion 16.

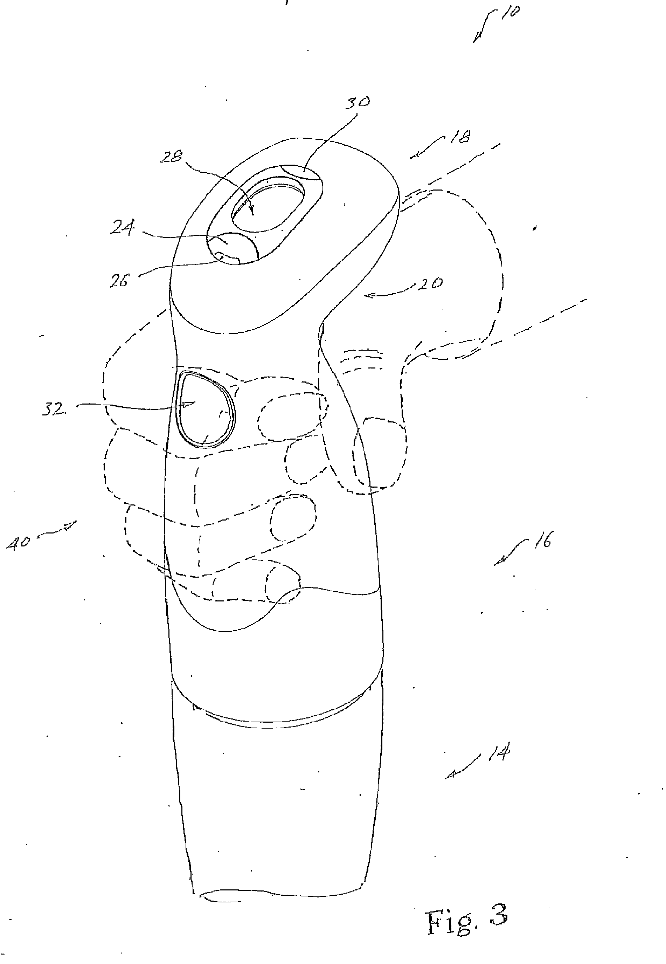

The upper part of power unit 12 is formed with a projecting upper body portion 18 extending rearwardly (relative the hand of a user as shown in Figure 3), and preferably at an angle from handgrip portion 16. Upper body portion 18 is shaped so that the underside 20 nestles comfortably against the hand 40 of a user, thereby helping to securely support the blender in use.

Arranged in the upper surface of upper body portion 18 is a control panel section 22 which includes at least first activation switch 24. It should be noted that the shape and size of upper body portion 18 and the location of control panel section 22 is such that first activation switch 24 cannot be reached by the thumb or fingers of a hand 40 gripping the blender 10 for use. It will also be noted that by arranging the upper body portion 18 to project above the handgrip portion 16, the control panel section 22 is continuously visible to a user.

Control panel section 22 further includes an indicator for indicating to a user whether or not the blender is in activated mode. The indicator may take the form of an LED 26 mounted in, or adjacent to, first activation switch 24. Alternatively, the indicator may comprise an LCD screen 28 or, in still another preferred form, indication may be by a combination of an LED and an LCD screen.

Control panel section 22 may further be provided in at least one preferred embodiment of the invention, with a speed selector button 30. A selected speed may be displayed on the LCD screen.

Mounted at the front of handgrip portion 16, is second operating switch 32, positioned so that it may easily be depressed by one of the fingers 34 curled around handgrip portion 16.

Operation a hand-held blender by means of the switching arrangement of the present invention, firstly requires the depressing or otherwise operating the first activation switch 24. In effect, this switches the blender 10 into a standby mode, enabling the second operating switch 32. This enabled or standby state of the second operating switch 32 is time limited for a predetermined period. This period, for example 5 seconds, may be factory set at manufacture. Alternatively, in one preferred embodiment of the invention, the period may be selectable by a user by means of, for example, pressing the first activation switch a number of times to cycle through an available set of predefined periods. Preferably periods are selectable in the range of 2 to 20 seconds, and a selected period may be displayed on the LCD screen 28.

Once the blender has been enabled by first activation switch 24, the blades (not shown) of the blender can be set into rotary motion by depressing and holding in a depressed state second activating switch 32. Rotary motion can be intermittent by releasing and re-applying pressure on switch 32, provided that periods of non activation of second operating switch 32 do not exceed the set (or selected) pre-defined period. In effect, the re-application of pressure on second activating switch 32 within the pre-defined period, resets the timer controlling the enabled state of the blender. The indicator of activation (LED 26 and/or LCD screen 28) then continues to show that the blender is in its enabled or standby state.

The arrangement of separating the enabling and operating functions of the blender as described above, virtually precludes the blender being inadvertently operated; it requires that the blender be gripped with one hand applied to the handgrip portion 16, while the other hand is then used to switch the blender into enabled mode with first activation switch 24. Moreover, the arrangement of the indicator on the upper surface of the upper portion 18 allows a user to easily check the status of the blender.

### IMPLEMENTAT ION

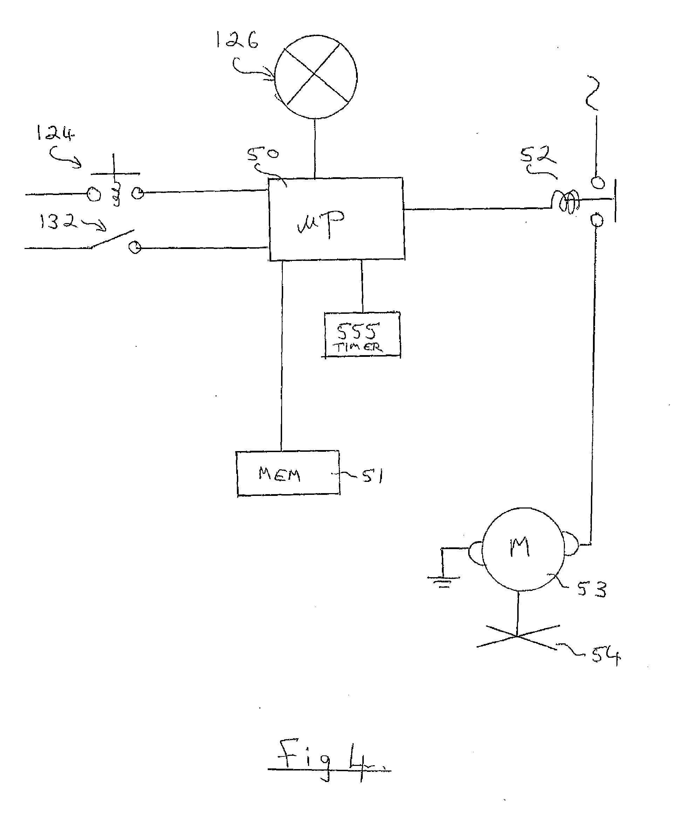

With reference to figure 4 there is illustrated in block diagram form a circuit diagram suited to implement the control aspects of the above described invention in at least one preferred form. In this diagram like components are numbered as for the earlier embodiments except in the 100s series.

In this instance a microprocessor 50 is caused to execute a program residing in memory 51. The microprocessor via its input/output ports operates the blender as described previously including the following salient aspects:

First activation switch 124 causes microprocessor 50 to illuminate light 126 either as a flashing light or as a constant illumination for a predetermined period. The predetermined period may be in the range from two seconds to ten seconds.

During this predetermined period operation of second activation switch 132 causes microprocessor 50 to activate relay 52 whereby motor 53 is caused to rotate so as to drive the blades 54 of the blender as previously described. If pressure is removed from the second action switch 132 so that the input to the microprocessor 50 is no longer active then relay 52 deactivates and relay 53 turns off.

Whilst second operating switch 132 is depressed providing input to microprocessor 50 the predetermined period is continually reset. Thus when second operating switch 132 is deactivated the predetermined period runs from the moment of deactivation of second switch 132 allowing a window of opportunity in which the second operating switch can be pressed again without needing to first press first activation switch 124. However, after the predetermined period has expired the microprocessor is programmed so that first activation switch 124 will need to be pressed again in order to re-arm the enablement of operating switch 132.

The above describes only some embodiments of the present invention and modifications, obvious to those skilled in the art, can be made thereto without departing from the scope of the present invention.

## Claims

1. A hand blender switch arrangement on a hand-held food blender; said switch arrangement including a first activation switch and a second operating switch; said first activation switch located in an upper surface of an upper body portion of a power unit of said blender; said second operating switch located in a front surface of a hand grip portion of said blender remote from said first activation switch such that said first activation switch cannot be readily operated by a hand gripping said hand blender for use.

2. The switch arrangement of claim 1 wherein operation of said first activation switch enables activation of said second operating switch.

3. The switch arrangement of claim 1 or 2 wherein depressing of said second operating switch when enabled sets blades of said hand blender into rotary motion.

4. The switch arrangement of any one of claims 1 to 3 wherein said first activating switch is located in an upper portion of said hand blender; said upper portion projecting above a hand-grip section of said hand blender; said upper portion un-obscured by a hand of a user gripping said hand blender for use.

5. The switch arrangement of claim 4 wherein said second operating switch is located in a portion of said hand-grip section of said hand blender; said switch located so as to be operable by a finger of a user curled around said hand-grip section for use.

6. The switch arrangement of any one of claims 1 to 5 wherein activation of said second operating switch is enabled by operation of said first activation switch for a predetermined period.

7. The switch arrangement of claim 6 wherein said predetermined period is preset in a range of between 2 and 20 seconds at manufacture of said hand blender.

8. The switch arrangement of claim 6 wherein said predetermined period is selectable by a user of said hand blender; said predetermined period selectable in a range of between 2 and 20 seconds.

9. The switch arrangement of any one of claims 6 to 8 wherein said hand blender remains intermittently operable by said second operating switch after operation of said first activation switch, provided any period of inactivity of said hand blender does not exceed said predetermined period.

10. The switch arrangement of any one of claims 6 to 9 wherein an indicator adjacent said first activation switch indicates that said hand blender is in an activated state; said indicator remaining in an indicating state for at least said predetermined period.

11. The switch arrangement of claim 10 wherein said indicator remains in said indicating state for as long as said blender remains operable.

12. The switch arrangement of claim 10 or 11 wherein said indicator is an LED located within said first activation switch.

13. The switch arrangement of claim 10 or 11 wherein said indicator is an LCD screen located adjacent said first activation switch.

14. The switch arrangement of any one of claims 10 to 13 wherein said indicator includes an audible signal.

15. A method of operating a hand blender by means of a first activating switch and a second operating switch; said method including the steps of:
(a) depressing said first activating switch located in an upper portion of a handle of said hand blender,
(b) depressing said second operating switch located in a front surface of a hand grip section of said blender,
and wherein said first activating switch is remote from said second operating switch such that said first activating switch and said second operating switch cannot readily be operated with the fingers of a hand normally gripping said hand grip section.
